# EUROPEAN PATENT APPLICATION

(11) **EP 4 026 432 A1**
(43) Date of publication of application: **13.07.2022**
(21) Application number: 20860159.1
(22) Date of filing: 27.08.2020
(51) Int. Cl.: A23L 27/60, A23D 7/00, A23D 7/005, A23D 9/00, A23D 9/007

(54) **OIL/FAT COMPOSITION**

(30) Priority: 02.09.2019 JP 2019159671
(71) Applicant: Fuji Oil Holdings Inc., Izumisano-shi, Osaka 598-8540 (JP)
(72) Inventor: MIZUSHIMA, Shigeki, Izumisano-shi, Osaka 598-8540 (JP)
(74) Representative: Becker, Eberhard
(86) International application number: PCT/JP2020/032430
(87) International publication number: WO 2021/044945

(57) **Abstract**

The present invention addresses the problem of providing an edible oil or fat that is usable for any kind of food, has an improved oxidation stability, and exhibits a good flavor. By stably dispersing a tea extract together with an acid in an oil or fat, the oxidation stability can be improved without increasing the formulation amount of the tea extract.

## Description

### [Technical Field]

The present invention relates to an oil and fat composition having improved oxidation stability, a food product containing the same, and a method for producing the same.

### [Background Art]

Due to growing social interest in health issues such as the aging population and increasing medical costs, it is required to provide products that take health into consideration, and there is a similar demand with regard to fats and oils that are indispensable for cooking foods.

Meanwhile, due to growing environmental awareness in recent years, there is a demand for reduction of food waste, and the demand for long-life foods is increasing due to the frequent occurrence of disasters. In other words, society is demanding an extension of the expiration date of food products and the raw materials thereof.

It is known that fats and oils deteriorate similarly to other substances, and for example, peroxidative substances generated by the oxidation of fats and oils are known to not only impair flavor of food products but also be harmful to the human body, and by suppressing oxidation, it is possible to provide health-friendly fats and oils.

The oxidation stability of types of food product is an important function leading to the type of food product directly or indirectly affecting setting of the expiration date. Therefore, various methods have been attempted to improve the oxidation stability of food products. In addition, fats and oils are some of the most important constituents in food products, but since fats and oils are easily oxidized, improving the oxidation stability of fats and oils is a particularly important issue in food products containing fats and oils.

Antioxidants are generally added to improve the oxidation stability of fats and oils and food products containing fats and oils. As the antioxidant, an oil-soluble antioxidant that readily disperses in fats and oils can be used, but the antioxidant capacity is relatively low compared to a water-soluble antioxidative substance. Therefore, water-soluble antioxidative substances are also often dispersed in fats and oils. Several methods have been disclosed in which, as a water-soluble antioxidant, tea extract is an effective additive, and the tea extract is dispersed in fats and oils to improve the oxidation stability of fats and oils or food products containing a large amount of fats and oils.

As a method for improving the dispersibility of tea extract in fats and oils, for example, in Patent Literature 1, a method is disclosed in which tea leaves crushed to have an average particle size of approximately 15 microns in a dry state are added to an edible oil, fine powder processing is performed with respect to the mixture until the particle size of the tea leaves becomes 1 to 10 microns using a wet ultrafine grinder to promote the transfer of tea leaf components to the edible oil, and then the tea leaf fine powder is removed to obtain an oily solution. Further, in Patent Literature 2, a method for producing fats and oils in which catechin is dispersed is disclosed in which green tea extract that is collected by combining extracts extracted from green tea leaves plural times using a water-containing organic solvent, with different concentrations when a concentration [volume/volume] of the organic solvent is 60% or more, that is, green tea extract containing hexane-soluble content derived from green tea in a proportion of 10% by mass or more with respect to catechin, is added to fats and oils having a specific gravity of 0.95 g/cm³ or more which are one of medium-chain triglycerides and castor oil, heated to 100 to 130°C, and ground. Furthermore, Patent Literature 3 discloses an antioxidant composition in which 0.1 to 30 parts by weight of catechin is dissolved in 70 to 99.9 parts by weight of a diglycerol fatty acid ester.

As a method for dissolving tea extract in a polar solvent, Patent Literature 4 discloses a lipophilic antioxidant made by emulsifying gallic acid, a water-soluble antioxidant, and an oil-soluble antioxidant in a water-in-oil type with a lipophilic emulsifier. Patent Literature 5 discloses an oil-soluble antioxidant which is an emulsion in which catechins, which are water-soluble antioxidant components derived from natural products, polyglycerol fatty acid esters having an HLB of 14 to 16, and water are incorporated as aqueous phase components, and fatty acid triglycerides and a polyglycerin condensed ricinoleic acid ester having 6 to 12 carbon atoms are incorporated as oil phase components, has an average particle size of 40 to 120 nm for catechin emulsion particles, and can disperse in fats and oils without causing coloration. Patent Literature 6 discloses a method for producing an oil-soluble antioxidant, the method including: (a) a step of dissolving green tea extract powder having a polyphenol content of 80% by weight or more in ethanol or propylene glycol; and (b) a step of emulsifying while sequentially adding emulsifiers (A), (B), and (C), of which HLB values are respectively 3.5 to 4.0, 3.0 to 3.5, and 2 or less, to the dissolved green tea extract. Patent Literature 7 discloses a method for improving the stability in the oxidation reaction of an edible oil, the method including: (a) a step of obtaining a mixture of antioxidant containing 0.04 to 50% by weight of a hydrophilic natural antioxidant and an oil by mixing at least one type of hydrophilic natural antioxidant into a highly polar oil at a temperature of 5 to 200°C; and (b) a step of mixing a mixture of the antioxidant and the oil into the edible oil such that the hydrophilic natural antioxidant has a concentration of 10 to 1000 ppm based on the weight. Patent Literature 8 discloses a method for producing edible vegetable fats and oils (here, excluding fats and oils having a diglyceride content of 15% by weight or more) in which the water-soluble tea polyphenol content is 300 ppm by weight to 600 ppm by weight, the emulsifier content is 200 ppm by weight to 800 ppm by weight, the emulsifier content is 1.5 times or less the water-soluble tea polyphenol content, and the following A/N value is 2.9 or more, in which an aqueous solution in which a water-soluble tea polyphenol is dissolved is added to the fats and oils in a dissolved state.

### [Reference List]

### [Patent Literature]

Patent Literature 1: Japanese Patent Laid-Open No. 63-135483
Patent Literature 2: Japanese Patent Laid-Open No. 2010-041965
Patent Literature 3: Japanese Patent No. 2015-037381
Patent Literature 4: Japanese Patent Laid-Open No. 2002-142673
Patent Literature 5: Japanese Patent Laid-Open No. 2013-159730
Patent Literature 6: Japanese Patent Laid-Open No. 2000-204370
Patent Literature 7: Japanese Patent No. 2015-188374
Patent Literature 8: International Publication No. 2013/172348

### [Summary of Invention]

### [Technical Problem]

All of these techniques in the related art have the aim, when the functions thereof are fully exerted, of improving the antioxidant properties of fats and oils by tea extract or tea polyphenol, which is an antioxidative substance, being dispersed in fats and oils.

Meanwhile, since the tea extract itself has astringency and an unpleasant taste, there is a problem that, in fats and oils and food products containing fats and oils, excessive incorporation of tea extract impairs the flavor of food products. In other words, even when tea extract simply disperses ideally in fats and oils and antioxidative activity can be imparted, the flavor may deteriorate due to the incorporation of the tea extract.

Considering the techniques in the related art, an object of the present invention is to provide edible oils and fats in which oxidation stability is improved and a good flavor is exhibited without increasing a formulation amount of tea extract in fats and oils containing tea extract.

### [Solution to Problem]

From the results of diligent research to solve the above-described problems, the inventors have found that edible oils and fats in which oxidation stability is improved and a good flavor is exhibited can be obtained using a method of incorporating tea extract, which is inherently sparingly soluble in fats and oils, and acids into fats and oils in a solution state in an aqueous medium, and thus realized the present invention.

In other words, the present invention relates to (1) an oil and fat composition containing 50 ppm by mass to 1000 ppm by mass of tea extract and 0.1 to 5 times as much acids as tea extract, (2) the oil and fat composition according to (1), in which an average particle size of an aqueous phase is 1000 nm or less, (3) the oil and fat composition according to (1) or (2), in which 80 ppm by mass to 800 ppm by mass of tea extract is contained, (4) a food product using the oil and fat composition according to any one of (1) to (3), (5) a method for producing the oil and fat composition according to any one (1) to (3), the method including: preparing the oil and fat composition by mixing an oil phase and the following aqueous phase (Aqueous phase: Aqueous solution in which tea extract and acids are dissolved), (6) the method for producing the oil and fat composition according to (5), in which 1 to 5 times as much water as tea extract is contained in the aqueous phase, and (7) a method for improving oxidation stability of an oil and fat composition, the method including: incorporating tea extract and acids in an aqueous phase dispersed into the oil and fat composition when producing the oil and fat composition.

### [Advantageous Effects of Invention]

According to the present invention, it is possible to provide an edible oil or fat that is usable for any kind of food, has an improved oxidation stability, and exhibits a good flavor.

As a preferred aspect, the tea extract and the acids stably disperse in the oil and fat composition according to the present invention. Further, the oil and fat composition according to the present invention can efficiently and stably disperse in food products.

### [Description of Embodiments]

Hereinafter, the present invention will be described in detail.

In the present invention, by incorporating the acids, the oxidation stability can be improved without increasing the formulation amount of the tea extract.

It is thought that the acids may have a stabilizing effect on the polyphenols contained in the tea extract.

An oil and fat composition according to the present invention contains 50 ppm by mass to 1000 ppm by mass of tea extract and 0.1 to 5 times as much acids as tea extract.

Examples of the tea extract include tea leaves such as green tea, oolong tea, and black tea, or extracts of processed products thereof, which are extracted with water, alcohol, or the like. It is preferable to use a green tea extract, and a commercially available green tea extract can be used.

As the acids, organic acids and/or inorganic acids can be used.

As the inorganic acid, phosphoric acids are preferably used, and examples thereof include orthophosphoric acid, diphosphoric acid (pyrophosphoric acid), and metaphosphoric acid.

The tea extract content of the oil and fat composition according to the present invention is preferably 80 ppm by mass to 800 ppm by mass, more preferably 100 ppm by mass to 600 ppm by mass, and still more preferably 150 ppm by mass to 400 ppm by mass. When the amount is extremely small, the effect of improving the oxidation stability cannot be obtained, and when the amount is extremely large, the effect on the flavor becomes large, which is not preferable.

The content of the acids according to the present invention is 0.1 to 5 times the amount of the tea extract. The content of acids is preferably 0.1 to 4 times, more preferably 0.1 to 3 times, still more preferably 0.12 to 3 times. When the formulation amount of the acid to be added to the tea extract is extremely small, the effect of improving the oxidation stability cannot be obtained, which is not preferable.

Examples of the fats and oils that can be used in the oil and fat composition according to the present invention include: vegetable fats and oils such as rapeseed oil, soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium chain triglycerides (MCT), shea butter, and sal butter; animal fats and oils such as milk fat, beef tallow, lard, fish oil, and whale oil; algae oil; modified fats and oils such as hydrogenated oils, fractionated oils, hydrogenated and fractionated oils, fractionated and hydrogenated oils, and ester-exchanged processed fats and oils of vegetable and animal fats and oils; and mixed oils and fats of these fats and oils. From the viewpoint of workability, it is preferable to use fats and oils that are liquid at room temperature, which are exemplified by palm olein, rapeseed oil, soybean oil, sunflower seed oil, and the like.

In the oil and fat composition according to the present invention, an oil-soluble emulsifier is preferably dissolved in the oil phase in order to maintain excellent dispersion stability. The oil-soluble emulsifier is an emulsifier that dissolves in fats and oils, and in the present invention, the oil-soluble emulsifier refers to an emulsifier having an HLB of 7 or less. As the oil-soluble emulsifier, one or more selected from polyglycerol ester, sugar ester, sorbitan ester, and monoglycerin fatty acid ester is preferable, polyglycerin ester, sugar ester, and distilled monoglyceride are more preferable, and polyglycerin ester is particularly preferable. Of these, polyglycerin condensed ricinoleic acid ester is most preferable. The polyglycerin condensed ricinoleic acid ester may be abbreviated as PGPR. The amount of the oil-soluble emulsifier in the oil phase is preferably 0.1 to 50 times the amount of the tea extract, more preferably 0.3 to 30 times the amount of the tea extract, and still more preferably 0.5 to 25 times the amount of the tea extract. By using an appropriate amount of an appropriate emulsifier, the dispersion stability of the tea extract can be improved and the function of the oil and fat composition containing tea extract can be exhibited. In a case where an excessive amount of emulsifier is used, when the oil and fat composition according to the present invention is used in a food product, the flavor derived from the emulsifier may deteriorate the taste and unintentionally inhibit emulsification, which may impair the quality of the food product.

The oil and fat composition according to the present invention is preferably adjusted such that the average particle size of the aqueous phase containing tea extract is 1000 nm or less. The average particle size is more preferably 500 nm or less, and still more preferably 300 nm or less. Adjusting the average particle size to 1000 nm or less is preferable because the tea extract can be stably dispersed. When the average particle size exceeds 1000 nm, the dispersion stability may deteriorate, which is not preferable. In the present invention, the average particle size is obtained by a dynamic light scattering method. Further, when the average particle size exceeds 1000 nm, it is difficult to perform analysis by the dynamic light scattering method, and thus the average particle size is obtained by a laser diffraction method.

A method for producing the oil and fat composition according to the present invention is not limited as long as the above-described oil and fat composition can be obtained, and a production method for preparing the oil and fat composition by mixing an aqueous solution, in which tea extract and acids are dissolved, into an oil phase can be exemplified. The tea extract and the acids do not need to be dissolved in the same aqueous solution.

As the method for producing the oil and fat composition according to the present invention, a production method for preparing the oil and fat composition by mixing the oil phase and the following aqueous phase can be exemplified.

### Aqueous phase: Aqueous solution in which tea extract and acids are dissolved

As a preferred aspect of the aqueous solution in which the tea extract and the acids are dissolved, the aqueous phase contains 1 to 5 times as much water as the tea extract. The aqueous phase more preferably contains 1 to 4.5 times as much water as the tea extract, still more preferably 1 to 4 times as much water as the tea extract, and still more preferably 1 to 3 times as much water as the tea extract. Most preferably, the aqueous phase contains 1 to 2 times as much water as the tea extract.

A mixer and a stirring device can be used for mixing the oil phase and the aqueous phase, and the device is not particularly limited, but a device capable of preventing air from being mixed during mixing and stirring is preferable. A mixing emulsification device such as a high-pressure homogenizer can be exemplified.

Since the oil and fat composition according to the present invention contains tea extract and acids and has excellent dispersion stability, excellent oxidation stability can be obtained. The evaluation of the oil and fat composition according to the present invention can be performed by obtaining a determination index regarding the oxidation stability of fats and oils by a conductmetric determination method (CDM) test. The larger the measured value of CDM, the better the oxidation stability. The CDM test can be performed using a dedicated test device (Rancimat). Specific measuring methods will be described in Examples. Both are acceleration tests for performing tests at a higher temperature than that of expected usage.

Since the oil and fat composition according to the present invention can adjust the tea extract to a wide concentration range, the oil and fat composition can be used for all food products. Seasonings such as dressings and mayonnaise; taste-based fillings and spreads such as pizza sauce; margarine; shortening; cooked products such as retort curry; roux such as stew and curry; frozen food products such as fried food; cooked bread; processed meats such as sausage; kneaded products such as Hanpen; food products obtained by cooking using these; rice crackers such as fried rice cakes; snack food products such as potato chips, corn snacks, and pretzels; frozen desserts; ice cream mixes; and other sweets and Japanese confectionery to taste can be exemplified.

As a preferred aspect, rice crackers, corn snacks (coating oils), fillings and spreads, sauces, soups, beverages, cooked rice binding-suppressing fats and oils, and ice creams, which are less heated during production can be exemplified.

The oil and fat composition according to the present invention contains tea extract as an essential component, but other antioxidants may also be contained in combination as long as the effects of the present invention are not impaired. Examples of other antioxidants include oil-soluble tocopherols, Yamamomo extract, polyphenols derived from grape seeds, and water-soluble antioxidative substances such as ascorbic acid and derivatives thereof, gallic acid and derivatives thereof, and the antioxidants may be used in combination.

In addition to emulsifiers and antioxidants, any components such as colorants, antifoaming agents, and fragrances may be incorporated into the oil and fat composition according to the present invention as long as the effects of the present invention are not impaired. The formulation amount of any of the components is preferably 5% by mass or less in total, more preferably 3% by mass or less, and most preferably 1% by mass or less in the oil and fat composition according to the present invention.

### Examples

Examples of the present invention will be described below, and the present invention will be described in more detail. In the example, both % and part mean units based on mass.

### ∘ Test Example 1. to Test Example 2.

### (Preparation Method)

The oil phase part was prepared according to the incorporation described in each oil phase field of Table 1 and Table 2. Similarly, the aqueous phase part was prepared according to the incorporation described in each aqueous phase field of Table 1 and Table 2.

The oil phase part was set to 25°C, and the aqueous phase part was incorporated while stirring with a homomixer (TK homomixer MARKII: manufactured by Primix Corporation) at 8000 rpm. In this state, the mixture was stirred for 10 minutes to obtain each oil and fat composition.

### (Used Raw Materials/Additives)

- As fats and oils, "rapeseed white squeezed oil" or palm olein "Palm Ace N" manufactured by Fuji Oil Co., Ltd. was used.
- For PGPR, polyglycerin condensed ricinoleic acid ester "CRS-75" manufactured by Sakamoto Yakuhin Kogyo Co., Ltd. was used.
- A tea extract having a polyphenol content of 80% or more (manufactured by Taiyo Kagaku Co. Ltd., trade name: Sunphenon 90S) was used.
- As acids, citric acid (anhydrous) manufactured by Fuso Chemical Co., Ltd., metaphosphoric acid lump (37%) manufactured by Wako Pure Chemical Industries, Ltd., and DL-malic acid manufactured by Wako Pure Chemical Industries, Ltd. were used.

### (Evaluation Method)

Average particle size of aqueous phase:
The average particle size was obtained by the dynamic light scattering method. Further, those having a particle size exceeding 1000 nm were obtained by the laser diffraction method.

Oxidation stability evaluation of oil and fat composition:
The CDM value was obtained and evaluated by the CDM test (Definition: Clean air is sent while heating the sample in a reaction vessel at 120°C. The time from collecting the volatile decomposition products generated by oxidation in water until reaching the inflection point where the conductivity of water changes rapidly), which is "Stability Test" of Standard Methods for the Analysis of Fats, Oils, and Related Materials (2.5.1.2-1996).

The rate of increase (%) in the CDM value was calculated for the acid-free group containing the same amount of tea extract and not containing acids, and the effects were compared (for example, in the case of Example 1, the rate of increase in the CDM value with respect to Comparative Example 3 containing the same amount of tea extract is calculated).

Those having an extension effect of 10% or more with respect to the CDM value containing the same amount of tea extract and not containing acids were regarded as acceptable.

Evaluation of astringency and unpleasant taste of oil and fat composition:
The fats and oils obtained in Examples and Comparative Examples were evaluated for flavor.

The flavor evaluation was performed by four skilled panelists, and the flavor evaluation score was determined by agreement. A case where the flavor evaluation score is 1 or more is determined to be acceptable.
2 points: Astringency or unpleasant taste is not felt.
1 point: The flavor is different from that of Comparative Example 1, but no clear astringency or unpleasant taste is felt.
0 points: Astringency and unpleasant taste are felt.

### Test Example 1.

An oil and fat composition was prepared according to the incorporation described in Table 1 and (Preparation Method), and evaluated according to (Evaluation Method). The results are shown in Table 1.

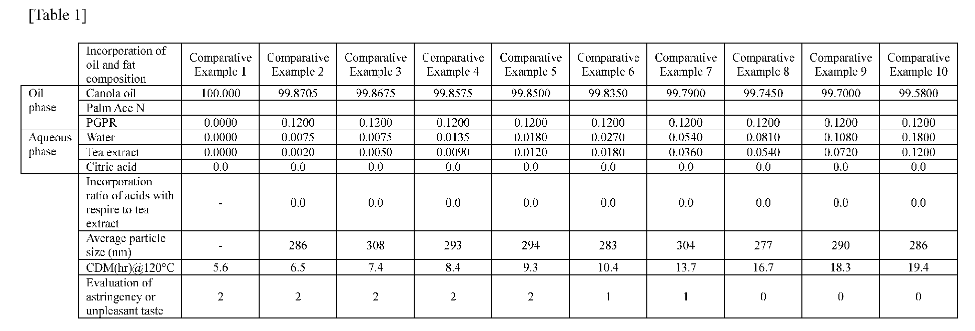

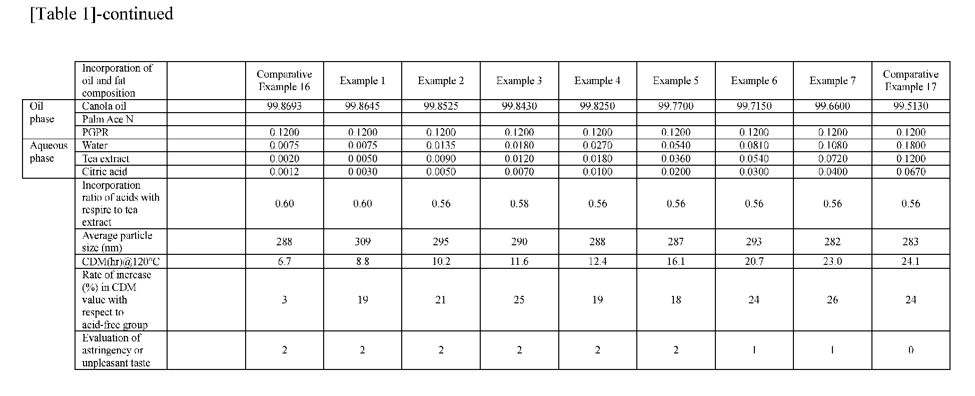

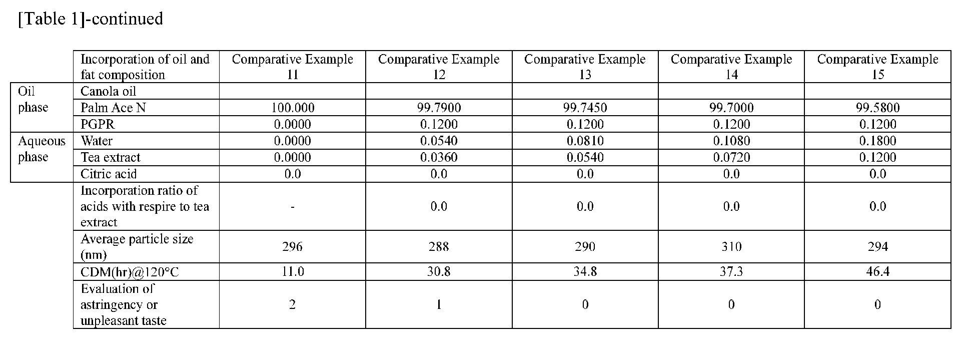

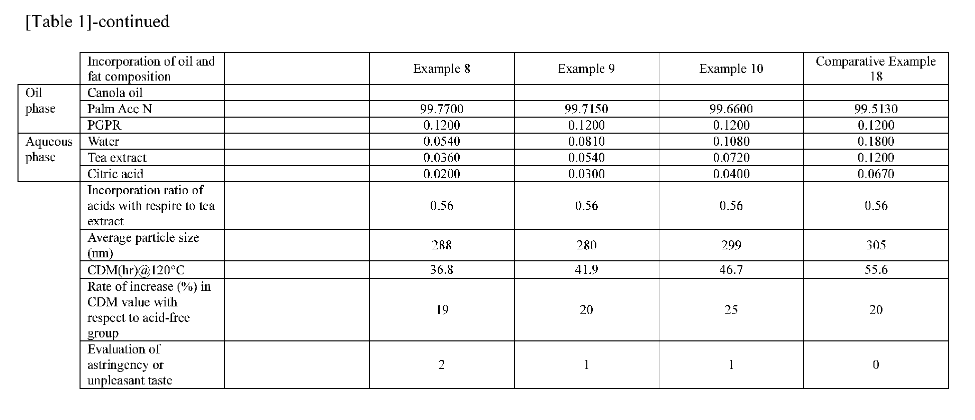

By the incorporation of the tea extract and the acids together, the oxidation stability of the oil and fat composition could be improved as compared with the addition of the tea extract alone. The effect was more effective as the formulation amount of tea extract was larger.

In addition, the combined use of acids and tea extract tended to reduce astringency and unpleasant taste. A similar effect was confirmed with palm olein.

The above-described effect was obtained by using citric acid, which is an organic acid, as the acid.

Accordingly, it was found that organic acids can be used as acids. It was also found that citric acid can be used as an organic acid.

### Test Example 2.

An oil and fat composition was prepared according to the incorporation described in Table 2 and (Adjustment Method), and evaluated according to (Evaluation Method). The results are shown in Table 2. It was described that the formulation amount of metaphosphoric acid was converted from metaphosphoric acid lump (37%) to achieve a purity of 100%.

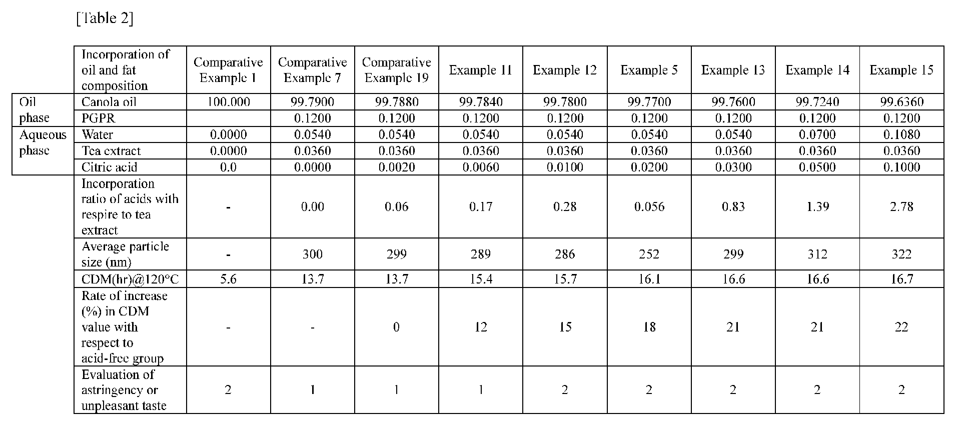

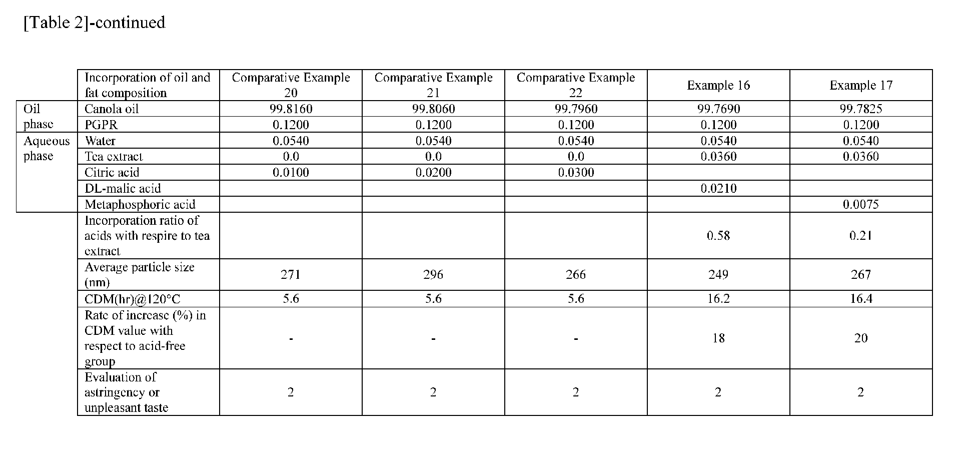

The effect of improving the oxidation stability varied depending on the formulation amount of acid in the tea extract, and a 0.1 to 5 times the amount of tea extract was appropriate.

It was found that the oxidation stability was not improved by the acids alone.

The effect was also obtained by using DL-malic acid, which is an organic acid, as the acid.

The effect was also obtained by using metaphosphoric acid, which is an inorganic acid, as the acid.

Therefore, it was found that DL-malic acid can be used as an organic acid.

Accordingly, it was found that inorganic acids can be used as acids. It was also found that metaphosphoric acid can be used as an inorganic acid.

### ∘ Preservation Test Results for Fats and Oils Only (Left at 60°C)

### (Evaluation of Oxidation Stability of Oil and fat Composition)

The evaluation of astringency and unpleasant flavor of the product was performed by four skilled panels, and the flavor evaluation score was determined by agreement. A case where the flavor evaluation score is 1 or more is determined to be acceptable.
2 points: Astringency or unpleasant taste is not felt.
1 point: The flavor is different from that of Comparative Example 1, but no clear astringency or unpleasant taste is felt.
0 points: Astringency and unpleasant taste are felt.
   - 80 g of canola oil adjusted product is input into a 100 ml glass bottle and sealed.
   - The glass bottle is preserved in a dark place at 60°C for 28 days.
   - After preservation, the peroxide value (POV) is measured and the flavor is evaluated. The evaluation item of the flavor was the deteriorated odor of fats and oils, and the sensory evaluation was performed in 10 steps by four panelists.

Fats and oils having an evaluation score of 5 or more on the 21st day of preservation were determined to be excellent.

Sensory evaluation and deteriorated odor of fats and oils: The larger the number, the weaker the deteriorated odor, and the smaller the number, the stronger the deteriorated odor.

The evaluation results are shown in Table 3.

**[Table 3]**

| Oil and fat composition | Content in oil and fat composition (PPM by weight) | | Evaluation of astringency or unpleasant taste | POV (meq/kg) / number of days of preservation | | | | | Sensory evaluation / number of days of preservation | | | | |
|---|---|---|---|---|---|---|---|---|---|---|---|---|---|
| | Tea extract | Acids | | 0^{th} day | 7^{th} day | 14^{th} day | 21^{st} day | 28^{th} day | 0^{th} day | 7^{th} day | 14^{th} day | 21 ^{st} day | 28^{th} day |
| Comparative example 1 | 0 | 0 | 2 | 0.3 | 6.3 | 15.6 | 33.4 | 58.0 | 10 | 7 | 4 | 1 | 0 |
| Comparative example 7 | 360 | 0 | 1 | 0.3 | 3.2 | 5.7 | 10.3 | 17.3 | 10 | 8 | 7 | 5 | 4 |
| Comparative example 9 | 720 | 0 | 0 | 0.3 | 2.1 | 3.9 | 6.8 | 11.2 | 10 | 9 | 8 | 7 | 5 |
| Comparative example 10 | 1200 | 0 | 0 | 0.3 | 1.5 | 2.5 | 3.8 | 7.4 | 10 | 10 | 9 | 8 | 7 |
| Comparative example 20 | 0 | 100 | 2 | 0.3 | 6.2 | 15.4 | 34.0 | 59.2 | 10 | 7 | 4 | 1 | 0 |
| Comparative example 21 | 0 | 200 | 2 | 0.3 | 6.7 | 16.5 | 33.1 | 56.7 | 10 | 7 | 3 | 1 | 0 |
| Comparative example 22 | 0 | 300 | 2 | 0.3 | 6.5 | 16.1 | 43.9 | 63.2 | 10 | 7 | 3 | 0 | 0 |
| Example 11 | 360 | 60 | 1 | 0.3 | 1.6 | 3.2 | 4.8 | 10.2 | 10 | 9 | 8 | 6 | 5 |
| Example 12 | 360 | 100 | 2 | 0.3 | 1.4 | 3.0 | 4.6 | 6.7 | 10 | 10 | 9 | 8 | 7 |
| Example 5 | 360 | 200 | 2 | 0.3 | 1.1 | 2.4 | 3.8 | 5.6 | 10 | 10 | 9 | 8 | 7 |
| Example 13 | 360 | 300 | 2 | 0.3 | 1.0 | 2.1 | 3.5 | 5.3 | 10 | 10 | 9 | 8 | 7 |
| Example 16 | 360 | 210 | 2 | 0.3 | 1.0 | 2.1 | 3.5 | 5.3 | 10 | 10 | 9 | 8 | 7 |
| Example 17 | 360 | 75 | 2 | 0.3 | 1.0 | 2.1 | 3.5 | 5.3 | 10 | 10 | 9 | 8 | 7 |

In Examples, the POV and flavor could be maintained excellent compared to Comparative Example 7, which had the same tea extract content. In Examples, the quality was equal to or higher than that of Comparative Example 9 in which the amount of the tea extract was doubled. In addition, excellent results were obtained in terms of astringency and unpleasant taste.

Even when any acids such as citric acid (Examples 5, 11, 12, and 13), which is an organic acid, DL-malic acid (Example 16), and metaphosphoric acid (Example 17), which is an inorganic acid, were used as the acids to be used, the above-described effect was also obtained.

### ∘ Application evaluation (preservation test with rice cracker spray)

### (Preparation Method and Evaluation Method of Rice Cracker)

20 parts of each prepared oil and fat composition was spray-coated on 80 parts of commercially available rice crackers (non-oil, no taste) to prepare rice crackers.

The flavor of rice crackers was evaluated. The evaluation results are shown in Table 4.

The evaluation of astringency and unpleasant flavor of the product was performed by four skilled panels, and the flavor evaluation score was determined by agreement. A case where the flavor evaluation score is 1 or more is determined to be acceptable.
2 points: Astringency or unpleasant taste is not felt.
1 point: The flavor is different from that of Comparative Example 1, but no clear astringency or unpleasant taste is felt.
0 points: Astringency and unpleasant taste are felt.

The rice cracker was put into an aluminum vapor-deposited bag and preserved in a dark place at 60°C, and the POV of fats and oils extracted from the rice cracker with hexane was measured over time.

In addition, the flavor after preservation was evaluated. The evaluation item of the flavor was the deteriorated odor of fats and oils, and the sensory evaluation was performed in 10 steps by four panelists. Fats and oils having an evaluation score of 6 or more on the 7th day of preservation were determined to be excellent.

Sensory evaluation and deteriorated odor of fats and oils: The larger the number, the weaker the deteriorated odor, and the smaller the number, the stronger the deteriorated odor.

**[Table 4]**

| Oil and fat composition | Content in oil and fat composition (PPM by weight) | | Evaluation of astringency or unpleasant taste | POV (meq/kg) / number of days of preservation | | | Sensory evaluation / number of days of preservation | | |
|---|---|---|---|---|---|---|---|---|---|
| | Tea extract | Acids | | 0^{th} day | 7^{th} day | 14^{th} day | 0^{th} day | 7^{th} day | 14^{th} day |
| Comparative example 1 | 0 | 0 | 2 | 0.9 | 41.8 | 123.1 | 10 | 1 | 0 |
| Comparative example 7 | 360 | 0 | 1 | 0.9 | 25.3 | 43.3 | 10 | 3 | 1 |
| Comparative example 9 | 720 | 0 | 0 | 0.9 | 11.6 | 24.7 | 10 | 6 | 3 |
| Comparative example 10 | 1200 | 0 | 0 | 0.9 | 9.0 | 15.1 | 10 | 7 | 5 |
| Comparative example 20 | 0 | 100 | 2 | 0.9 | 43.7 | 126.7 | 10 | 1 | 0 |
| Comparative example 21 | 0 | 200 | 2 | 0.9 | 45.4 | 148.7 | 10 | 1 | 0 |
| Comparative example 22 | 0 | 300 | 2 | 0.9 | 42.2 | 136.5 | 10 | 1 | 0 |
| Example 11 | 360 | 60 | 1 | 0.9 | 9.1 | 18.3 | 10 | 6 | 3 |
| Example 12 | 360 | 100 | 2 | 0.9 | 7.5 | 17.1 | 10 | 7 | 4 |
| Example 5 | 360 | 200 | 2 | 0.9 | 6.1 | 14.5 | 10 | 8 | 5 |
| Example 13 | 360 | 300 | 2 | 0.9 | 5.3 | 12.3 | 10 | 8 | 5 |
| Example 16 | 360 | 210 | 2 | 0.9 | 5.8 | 13.5 | 10 | 7 | 4 |
| Example 17 | 360 | 75 | 2 | 0.9 | 6.2 | 12.1 | 10 | 8 | 5 |

The application using the oil and fat compositions of Examples 5, 11 to 13, 16, and 17 could maintain more excellent POV and flavor than those in the application using the oil and fat composition of Comparative Example 7 having the same tea extract content. In Examples, the quality was equal to or higher than that of Comparative Example 9 in which the amount of the tea extract was doubled. In addition, excellent results were obtained in terms of astringency and unpleasant taste. Results similar to a case of using only fats and oils were obtained with only fats and oils.

Similar to only fats and oils, even when any acids such as citric acid (Examples 5, 11, 12, and 13), which is an organic acid, DL-malic acid (Example 16), and metaphosphoric acid (Example 17), which is an inorganic acid were used as the acids to be used, the above-described effect was also obtained.

### [Industrial Applicability]

According to the present invention, it is possible to provide an edible oil or fat containing tea extract, which has improved oxidation stability and has excellent flavor, which can be used for all food products without increasing the formulation amount of the tea extract.

## Claims

1. An oil and fat composition comprising 50 ppm by mass to 1000 ppm by mass of a tea extract and 0.1 to 5 times as much acids as the tea extract.

2. The oil and fat composition according to claim 1, wherein
an average particle size of an aqueous phase is 1000 nm or less.

3. The oil and fat composition according to claim 1 or 2, wherein
80 ppm by mass to 800 ppm by mass of the tea extract is contained.

4. A food product using the oil and fat composition according to any one of claims 1 to 3.

5. A method for producing the oil and fat composition according to any one of claims 1 to 3, comprising:
preparing the oil and fat composition by mixing an oil phase and an aqueous phase,
wherein the aqueous phase: an aqueous solution in which tea extract and acids are dissolved.

6. The method for producing the oil and fat composition according to claim 5, wherein
1 to 5 times as much water as the tea extract is contained in the aqueous phase.

7. A method for improving oxidation stability of an oil and fat composition, comprising:
incorporating a tea extract and acids in an aqueous phase dispersed into the oil and fat composition when producing the oil and fat composition.
